# EUROPÄISCHE PATENTSCHRIFT

(11) **EP 1 610 619 B1**
(45) Veröffentlichungstag und Bekanntmachung des Hinweises auf die Patenterteilung: **24.10.2012**
(21) Anmeldenummer: 04719387.5
(22) Anmeldetag: 11.03.2004
(51) Int. Cl.: A23G 3/44, A23G 3/54, A23G 3/36, A23L 1/305

(54) **FRUCHTGUMMIZUSAMMENSETZUNG**
FRUIT GUM COMPOSITION
COMPOSITION D'UNE GOMME AUX FRUITS

(30) Priorität: 28.03.2003 DE 10314453; 28.10.2003 DE 10350140
(43) Veröffentlichungstag der Anmeldung: 04.01.2006
(73) Patentinhaber: Schymura, Martin, 93053 Regensburg (DE)
(72) Erfinder: Schymura, Martin, 93053 Regensburg (DE)
(74) Vertreter: Hannke, Christian
(86) Internationale Anmeldenummer: PCT/EP2004/002483
(87) Internationale Veröffentlichungsnummer: WO 2004/084718

(56) Entgegenhaltungen:
- WO-A-02/00033
- DE-U- 20 116 892
- FR-A- 2 667 764
- GB-A- 398 193
- GB-A- 856 078
- US-A- 5 976 550
- US-B1- 6 562 869

## Beschreibung

Die Erfindung betrifft eine Fruchtgummizusammensetzung, enthaltend mindestens ein Süßungsmittel, mindestens ein Gelier- und/oder Verdickungsmittel, mindestens ein Säuerungsmittel, mindestens einen Farbstoff, mindestens einen Aromastoff und als Oberflächenbehandlungsmittel mindestens ein Trenn- und Glänzmittel oder Bezuckerungsmittel, gemäß dem Oberbegriff des Patentanspruches 1. Des Weiteren betrifft die Erfindung ein Verfahren zur Herstellung einer derartigen Fruchtgummizusammensetzung und deren Anwendung.

Fruchtgummizusammensetzungen sind den Konsumenten von Nahrungsergänzungsmitteln allgemein bekannt, wie beispielsweise in Form des Produktes Gummibärchen. Derartige Fruchtgummizusammensetzungen bestehen -wie es beispielsweise in der EP 106 98 56 A1 gezeigt wird- üblicherweise als wohlschmeckende, fruchtige Süßware aus Glukosesirup, Zucker, Gelatine, Säuerungsmittel, sowie Farb- und Aromastoffen. Aufgrund der Glukosesirup- und Zuckeranteile weisen herkömmliche Fruchtgummizusammensetzungen hohe Kalorienzahlen und einen geringen sonstigen Nährwert auf, die dazu führen können, dass insbesondere Sportler und schlankheitsbewusste Personen einen zumindest hohen Konsum von Fruchtgummizusammensetzungen vermeiden.

Des Weiteren werden in der WO 02/00033 A1 Süßwarenprodukte beschrieben, die Wirkstoffe in einem oder in einer Vielzahl von Trägerkörpern beinhalten, um das Beimischen der Wirkstoffe zu erleichtern. Dies kann beispielsweise durch das Einschließen der Wirkstoffe in den Trägerkörpern in flüssiger Form realisiert werden. Zudem können derartige Trägerkörper für die konsumierenden Personen sichtbar ausgestaltet sein und mit einer speziellen Formgestaltung, wie beispielsweise die eines Würfels, versehen werden. Als einer der Wirkstoffe wird Carnitin aufgezählt.

Derartige kapselähnlichen Anordnungen von Wirkstoffen innerhalb von Süßwaren zielen in erster Linie auf die ästhetische Wirkung gegenüber den konsumierenden Personen und auf Vorteile bei der Beimischung ab. Weitere Hinweise zu der Zusammensetzung des Carnitins sind der WO 02/00033 A1 nicht zu entnehmen.

Demzufolge liegt der vorliegenden Erfindung die Aufgabe zugrunde, eine Fruchtgummizusammensetzung zur Verfügung zu stellen, deren Verzehr für die jeweilige konsumierende Person, insbesondere Sportler, schlankheits- und energiefördernd ist und die entsprechenden Wirkstoffe in hoher Konzentration bereitstellt. Des Weiteren ist es Aufgabe der Erfindung, ein Verfahren zur Herstellung einer derartigen Fruchtgummizusammensetzung und deren Anwendung zur Verfügung zu stellen.

Diese Aufgabe wird produktseitig durch die Merkmale des Patentanspruches 1, verfahrensseitig durch die Merkmale des Patentanspruches 9 und anwendungsseitig durch die Merkmale des Patentanspruches 11 gelöst.

Ein wesentlicher Punkt der Erfindung liegt darin, dass eine Fruchtgummizusammensetzung, enthaltend mindestens ein Süßungsmittel, mindestens ein Gelier- und/oder Verdickungsmittel, mindestens ein Säuerungsmittel, mindestens einen Farbstoff, mindestens einen Aromastoff und als Oberflächenbehandlungsmittel mindestens ein Trenn- und Glänzmittel oder Bezuckerungsmittel, bereitgestellt wird, wobei die Fruchtgummizusammensetzung zusätzlich L-Carnitin der Formel C₇H₁₅NO₃ in zumindest zeitweise vorliegender kristalliner Form in Konzentrationen über 0, 1 % (Gew.) und/oder mindestens ein pharmakologisch akzeptables L-Carnitin-Salz, bevorzugt aus einer Gruppe, die L-Carnitin-Tartrat der Formel C₁₈H₃₆N₂O₁₂, L-Carnitin-Magnesiumcitrat der Formel C₁₃H₂₁MgNO₁₀ und L-Carnitin-Fumarat der Formel C₁₁H₁₉NO₇ umfasst und/oder mindestens eine L-Carnitin-Salzmischung und/oder mindestens ein L-Carnitin-Komplex und/oder mindestens ein L-Carnitin-Komplexsalz und/oder ein pharmakologisch akzeptables Acetyl-L-Carnitin-Salz, bevorzugt Acetyl-L-Carnitin-Hydrochlorid enthält. Bei Verwendung von L-Carnitin liegt es in zumindest zeitweise vorliegender kristalliner Form mit der Formel C₇H₁₅NO₃ oder C₁₈H₃₆N₂O₁₂ vor. Durch die Zumischung von L-Carnitin und/oder dessen Salze, Komplexe, Salzmischungen, Fumarate sowie L-Carnitin enthaltende Stoffmischungen mit derartigen Formeln wird erreicht, dass die Fruchtgummizusammensetzung, die beispielsweise in Form von Gummibären vorliegt, die Effekte der Fettverbrennung und Energiefreisetzung bei konsumierenden Personen maßgeblich mitbeeinflusst und unterstützt. Aufgrund dieser Effekte wird der Verzehr von Fruchtgummis insbesondere für Sportler vor, während und nach dem Training, aber auch für schlankheitsbewußte Menschen sehr attraktiv. Denn der Verzehr der erfindungsgemäßen Fruchtgummizusammensetzung führt insbesondere bei einem Verzehr in großen Mengen zu einem erhöhten Fettstoffwechsel, der wiederum insbesondere in Verbindung mit ausreichender Bewegung des menschlichen Körpers eine erhöhte Fettverbrennung innerhalb des menschlichen Körpers zur Folge hat. Auch wird eine das Herz und die Muskeln unterstützende Energiegewinnung, eine Leistungssteigerung, eine Stressreaktionsmilderung und eine Erholung des menschlichen Körpers bei physischen Anstrengungen gefördert. Zudem eignet sich die Fruchtgummizusammensetzung als Ergänzungsnahrungsmittel bei durchzuführenden Diäten.

Vorteilhaft kann aufgrund der erfindungsgemäßen Kombination von Fruchtgummi mit L-Carnitin und/oder dessen Salze, Komplexe, Komplexsalze, Salzmischungen, Fumarate sowie L-Carnitin enthaltende Stoffmischungen eine dosierte und über den Tag verteilte Aufnahme von L-Carnitin durch den Konsumenten praktiziert werden. Fruchtgummi ist zudem für alle Altersklassen ansprechend. Insbesondere können durch die Kombination von Fruchtgummi mit Salzen, Komplexen, Komplexsalzen, Salzmischungen und/oder Fumarate des L-Carnitins wohlschmeckende Fruchtgummizusammensetzungen mit verschiedensten zusätzlichen Effekten erhalten werden. Beispielsweise liegt bei einer Hinzumischung von L-Carnitin Magnesiumcitrat zugleich eine sich auf die Muskulatur eines Sportlers vorteilhaft auswirkende Magnesiummischung vor. Das Hinzumischen von Acetyl-L-Carnitin-Hydrochlorid hingegen stellt zusätzlich einen Nährstoff für das menschliche Gehirn, der für die kognitive Leistungsfähigkeit wichtig ist, dar.

Gemäß einer bevorzugten Ausführungsform wird das L-Carnitin als kristallines Tartrat ausgebildet und der Fruchtgummizusammensetzung zugemischt. Hierbei weißt das kristalline Tartrat eine Molekülmasse von 472, 49 u auf.

Bevorzugt wird in der Fruchtgummizusammensetzung L- Carnitin und/oder L-Carnitin-Salz und/oder L-Carnitin-Komplex und/oder L-Carnitin-Komplexsalz und/oder Acetyl-L-Carnitin-Salz mit einem Reinheitsgrad von mindestens 99 % und höchstens 1 % Restbestandteile eingesetzt. L-Carnitin in reiner kristalliner Form mit einem Reinheitsgrad von mindestens 99 % und höchstens 1 % Restbestandsteile weist eine Molekülmasse von 161,20 u auf.

Das L-Carnitin liegt in beiden Fällen ohne Bestandteile an D-Carnitin, welches toxische Wirkung haben kann, vor.

Sofern die erfindungsgemäße Fruchtgummizusammensetzung zu Gummibären geformt wird, weist jedes Gummibär 0 - 5000 mg, insbesondere 0 - 1000 mg, vorzugsweise 1 mg oder 5 mg oder 10 mg L-Carnitin bei Verwendung einer üblichen Gummibärgröße auf. Selbstverständlich kann der L-Camitin-Anteil kleiner oder größer in Abhängigkeit von der Gummibärgröße gestaltet werden.

Als Süßungsmittel wird vorzugsweise Glucosesirup, Zucker, insbesondere Saccharose, Fructose, Sorbit und Zuckeraustauschstoffe, insbesondere Isomalt und/oder Maltitsirup, oder eine Kombination derjenigen verwendet werden.

Mögliche Gelier- und/oder Verdickungsmittel sind vorzugsweise Gelatine und/oder Pektine und/oder Stärke und/oder modifizierte Stärke und/oder Agar Agar und/oder Gummi Arabicum oder Mischungen davon.

Als Säuerungsmittel werden entweder Citronensäure und/oder Milchsäure und/oder Apfelsäure oder Mischungen davon verwendet. Diese können sowohl innerhalb des eigentlichen Fruchtgummis als auch in einer im Rahmen einer Oberflächenbehandlung stattfindenden Zuckerung enthalten sein.

Mögliche Farbstoffe sind mindestens ein färbender Frucht- und Pflanzenextrakt und/oder mindestens ein künstlicher Farbstoff und/oder mindestens ein naturidentischer Farbstoff.

Die im Rahmen der Oberflächenbehandlung eingesetzten Trenn- und Glänzmittel Bienenwachs und pflanzlichen Öle können ebenso durch Carnaubawachs und andere ölhaltige Mittel oder deren Kombination ersetzt werden.

Wahlweise können Zusammensetzungsstoffe können aus kontrolliert biologischem Anbau gemäß EG-Verordnung eingesetzt werden.

Durch die Verwendung von zuckerfreien Stoffen als Süßungsmittel ist der Verzehr der erfindungsgemäßen Fruchtgummizusammensetzung auch für Diabetiker möglich.

Ein weiterer wesentlicher Aspekt der Erfindung ist ein Verfahren zur Herstellung einer Fruchtgummizusammensetzung mit mindestens einem Süßungsmittel, mindestens einem Gelier- und/oder Verdickungsmittel, mindestens einem Säuerungsmittel, mindestens einem Farbstoff, mindestens einem Aromastoff und als Oberflächenbehandlungsmittel mindestens einem Trenn- und Glänzmittel oder Bezuckerungsmittel, wobei der Fruchtgummizusammensetzung L-Carnitin der Formel C₇H₁₅NO₃ in zumindest zeitweise vorliegender kristalliner Form in Konzentrationen über 0,1% (Gew.) und/oder mindestens ein pharmakologisch akzeptables L-Carnitin-Salz, bevorzugt aus einer Gruppe, die L-Carnitin-Tartrat der Formel C₁₈H₃₆N₂O₁₂, L-Carnitin-Magnesiumcitrat der Formel C₁₃H₂₁MgNO₁₀ und L-Carnitin-Fumarat der Formel C₁₁H₁₉NO₇ umfasst und/oder mindestens eine L-Carnitin-Salzmischung und/oder mindestens ein L-Carnitin-Komplex und/oder mindestens ein L-Carnitin-Komplexsalz und/oder ein pharmakologisch akzeptables Acetyl-L-Carnitin-Salz, bevorzugt Acetyl-L-Carnitin-Hydrochlorid zugesetzt wird.

Bevorzugt werden in dem Verfahren das L-Carnitin und/oder L-Carnitin-Salz und/oder L-Carnitin-Komplex und/oder L-Carnitin-Komplexsalz und/oder Acetyl-L-Carnitin-Salz mit einem Reinheitsgrad von mindestens 99 % und höchstens 1 % Restbestandteile zugemischt.

Ein weiterer Aspekt der Erfindung ist die Anwendung der oben beschriebenen Fruchtgummizusammensetzung zur Herstellung von Nahrungsergänzungsmitteln.

Wahlweise können Zusammensetzungsstoffe können aus kontrolliert biologischem Anbau gemäß EG-Verordnung eingesetzt werden.

Durch die Verwendung von zuckerfreien Stoffen als Süßungsmittel ist der Verzehr der erfindungsgemäßen Fruchtgummizusammensetzung auch für Diabetiker möglich.

Weitere Vorteile aus der Ausgestaltung ergeben sich aus den Unteransprüchen.

Nachfolgend wird die Erfindung unter Bezugnahme auf ein Herstellungsbeispiel, wie es zusätzlich in den Figuren 1 - 3 dargestellt wird, beschrieben. Hierbei zeigen:
- Fig. 1: einen ersten Herstellungsabschnitt des Herstellungsvorgangs der erfindungsgemäßen Fruchtgummizusammensetzung;
- Fig. 2: einen zweiten Herstellungsabschnitt des Herstellungsvorganges der erfindungsgemäßen Fruchtgummizusammensetzung; und
- Fig. 3: einen dritten Herstellungsabschnitt des Herstellungsvorganges der erfindungsgemäßen Fruchtgummizusammensetzung.

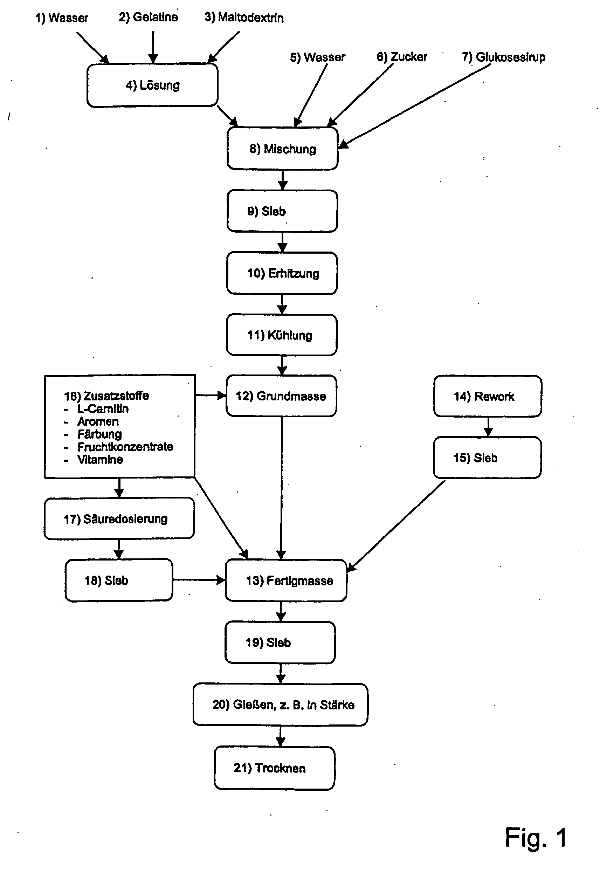

Fig. 1 zeigt einen ersten Herstellungsabschnitt des Herstellungsverfahrens für die erfindungsgemäße Fruchtgummizusammensetzung. Zunächst werden Wasser 1, Gelatine 2 und eventuell weitere Stoffe, wie Maltodextrin 3 zu einer Geliermittellösung mittels heißem Wasser vermischt. Alternativ oder zusätzlich zu der Gelatine 2 können auch Pektin, Agar Agar sowie modifizierte Weizen-, Mais- und/oder Kartoffelstärken ebenso wie Gummi Arabicum oder Mischungen davon verwendet werden.

Zu der Geliermittellösung 4 werden die Rohstoffe Lösungswasser 5, Zucker 6 und Glukosesirup 7 unter Hinzuziehung von Rührwerke zu einer homogenen Mischung 8 zusammengebracht.

Diese Mischung 8 wird durch ein Sieb 9 in eine Kochanlage gepumpt. Durch Erhitzung wird die erforderliche Lösungstemperatur der Mischung in einem Erhitzungsabschnitt 10 erreicht. Anschließend wird die Mischung zum Abkühlen, zur Entspannung und zur Entgasung durch eine Kühlvorrichtung 11 geleitet und liegt anschließend als blasenfreie Grundmasse vor.

Anschließend wird die transparente und entlüftete Grundmasse mit einer Pumpe aus einem Vakuumbehälter gepumpt.

Zusätzliche Wiederaufbereitungsschritte ermöglichen das Hinzufügen weiterer Stoffe 14 mittels einer Siebvorrichtung 15 zu einer aus der Grundmasse 12 erhaltenen Fertigmasse 13.

Je nach Rezeptur werden der Grundmasse 12 weitere Zusatzstoffe 16 vorzugsweise manuell hinzugegeben. Zu diesen Zusatzstoffen zählt insbesondere das in kristalliner Form vorliegende L-Carnitin mit der Formel C₇H₁₅NO₃ oder C₁₈H₃₆N₂O₁₂.

Zudem können Fruchtsäuren, wie beispielsweise Citronen-, Apfel- und/oder Milchsäure zur Erzielung eines sauren Geschmacks und zum Unterstützen der Gelierung hinzugegeben werden.

Auch natürliche oder naturidentische Aromastoffe werden der Masse beigemischt, um so in Wechselwirkung mit den Säuren einen typischen Fruchtgeschmack zu ergeben.

Ebenso können Früchte und/oder Fruchtsaft-Konzentrate für eine Verbesserung des Geschmacks und/oder des natürlichen Aussehens hinzugegeben werden.

Auch färbende Frucht- und Pflanzenauszüge beziehungsweise synthetisch hergestellte Lebensmittelfarbstoffe können für die Einfärbung des Produktes als erforderlich betrachtet werden.

Ein derartiges Aromatisieren der Masse findet entweder manuell durch manuelle Zugabe der Zusatzstoffe 16 oder maschinell durch eine automatische Dosierung statt.

Das L-Carnitin und weitere Zusatzstoffe können alternativ einer Säurelösung mittels einer Säuredosierung 17 und gegebenenfalls einem Sieb 18 der Fertigmasse 13 oder der Grundmasse 12 direkt oder der Fertigmasse 13 direkt zugeführt werden. Hierbei findet die Zugabe entweder manuell mit manueller Verrührung mittels eines Schneebesens oder eines Rührwerks oder über eine automatische Säuredosierung zum Erreichen eines homogenen Massegemisches statt.

Für die Herstellung von Schaumprodukten oder zweilagigen Produkten, wie beispielsweise Fruchtgummi mit Schaumanteil, wird ein Teil der Masse vor dem Vergießen unter Zusatz von Stickstoff und/oder Luft mittels Aufschlagmaschinen aufgeschäumt.

Die Fertigmasse 13 wird nochmals durch ein Sieb 19 geleitet und in negativen Formen aus Formpuder, wie beispielsweise Mais- und/oder Weizenstärke, gegossen. Das Gießen 20 findet durch eine Dosierung der flüssigen, warmen Gießmasse mittels eines Kolbens unter Zuhilfenahme von Düsen statt.

Die Gießmasse erstarrt infolge der Abkühlung und trocknet durch Feuchtigkeitsverlust an der Luft und dem Formpuder aus. Nach einer gewissen Zeit werden die dann fest gewordenen Fruchtgummistücke mechanisch vom Formpuder getrennt und gereinigt. Anschließend wird bei einer Temperatur von ca. 10 - 40 °C für eine vorbestimmte Zeitdauer ein Trocknungsvorgang 21 durchgeführt.

Alternativ zu der Trocknung der gegossenen Fruchtgummistücke kann ein puderloser Trocknungsvorgang ohne Verwendung von Formpuder durch Einfüllen der Gießmasse in vorgefertigte feste Formen erfolgen.

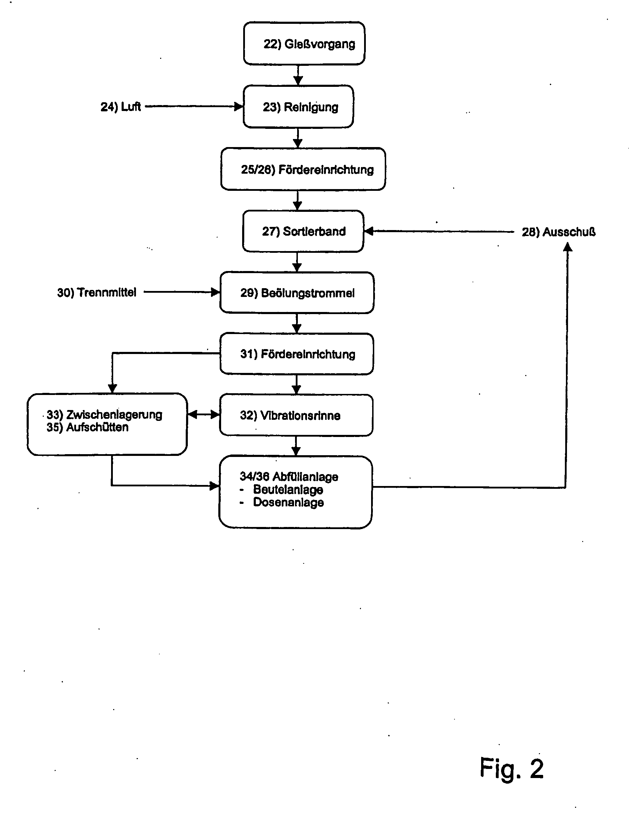

Fig. 2. zeigt einen zweiten Herstellungsabschnitt des Herstellungsverfahrens, bei dem eine Oberflächenbehandlung des Produktes stattfindet. Zunächst werden die getrockneten Fruchtgummis mittels Siebe und Bürsten 22 vom anhaftenden Formpuder befreit. Eine zusätzliche Reinigung 23 findet mittels Pressluft 24 statt.

Anschließend wird mittels eines Steilförderers 25, Förderbänder 26 und einem Sortierband 27 eine Sortierung durchgeführt, um mangelhaft geformte Fruchtgummis auszusortieren (Abfall 28).

Um eine glänzende Oberfläche zu erzeugen und zu verhindern, dass die Fruchtgummis zusammenkleben, werden Sie gemäß den Transportbändern 25 - 27 in eine Beölungstrommel 29 befördert. Dort wird eine Mischung aus pflanzlichen Ölen und Bienenwachs 30 zudosiert. Diese Mischung wird gleichmäßig auf die in der Trommel rotierenden Fruchtgummis verteilt und in die Produktoberflächen einmassiert, um eine Beölung der Fruchtgummis zu erreichen.

Alternativ können die Fruchtgummis bezuckert werden, indem sie auf einem Gitterband kurzzeitig mit Dampf behandelt werden, um ihre Oberfläche anzuschmelzen und klebrig zu machen. Anschließend werden sie mit Kristallzucker und/oder einer Zucker-Säure-Mischung in einer rotierenden Siebtrommel bestreut, so dass sich der Kristallzucker beziehungsweise die Zucker-Säure-Mischung an der klebrigen Oberfläche der Fruchtgummis anhaftet.

Die für die Zucker-Säure-Mischung verwendeten Säuerungsmittel sind Fumarsäure und/oder Apfelsäure und/oder Calciumcitrat und/oder Calcilatol oder Mischungen davon.

Mittels der Einrichtungen 31, 32, 33, 34, 35 und 36 findet eine Abfüllung der Fruchtgummis in Beutel und/oder Dosen statt.

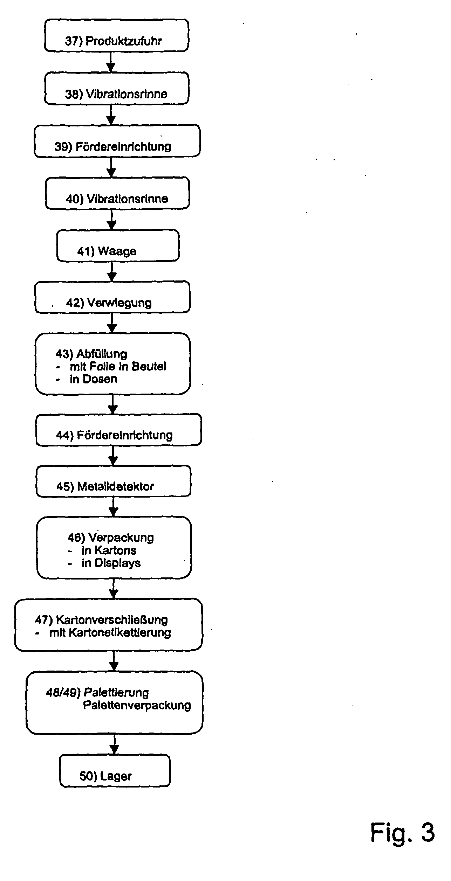

In Fig. 3 wird in einem dritten Herstellungsabschnitt das Verpacken der Fruchtgummis beschrieben. Sofern die Fruchtgummis in Produktionskörben und Produktionswannen zwischengelagert werden, werden sie aus der Zwischenlagerung 37 über Vibrationsrinnen 38, 40 einen Steilförderer 39, einer Verteilerteller-Waage 41, einer Abfüll-Waage 42, 43 zugeführt. Über ein Zuführband 44 werden die in Beuteln abgefüllten Fruchtgummis unter einem Metalldetektor 45 zu Kontrollzwecken durchgeführt. Anschließend werden die Fruchtgummi-Beutel oder -Dosen in Kartons / Displays 46 verpackt, die wiederum verschlossen 47, palettiert 48 und in Form von Palettenverpackungen 49 im Lager 50 gelagert werden.

Alternativ zu der Anreicherung einer Fruchtgummizusammensetzung mit L-Carnitin ist auch die Anreicherung von Fruchtbonbons bzw. Bonbons mit L-Carnitin denkbar.

Sämtliche in den Anmeldungsunterlagen offenbarten Merkmale sind als erfindungswesentlich anzusehen. Abwandlungen hiervon sind dem Fachmann geläufig.

## Patentansprüche

1. Fruchtgummizusammensetzung, enthaltend mindestens ein Süßungsmittel, mindestens ein Gelier- und/oder Verdickungsmittel, mindestens ein Säuerungsmittel, mindestens einen Farbstoff, mindestens einen Aromastoff und als Oberflächenbehandlungsmittel mindestens ein Trenn- und Glänzmittel oder Bezuckerungsmittel,
**dadurch gekennzeichnet, dass**
die Fruchtgummizusammensetzung zusätzlich L-Camitin der Formel C₇H₁₅NO₃ in zumindest zeitweise vorliegender kristalliner Form in Konzentrationen über 0.1% (Gew.) und/oder mindestens ein L-pharmakologisch akzeptables L-Carnitin-Salz, bevorzugt aus einer Gruppe, die L-Carnitin-Tartrat der Formel C₁₈H₃₈N₂O₁₂. L-Carnitin-Magnesiumcitrat der Formel C₁₃H₂₁MgNO₁₀ und L-Carnitin-Fumarat der Formel C₁₁H₁₉NO₇ umfasst und/oder mindestens eine L-Carnitin-Salzmischung und/oder mindestens ein L-Carnitin-Komplex und/oder mindestens ein L-Carnitin-Komplexsalz und/oder ein pharmakologisch akzeptables Acetyl-L-Carnitin Salz-bevorzugt Acetyl-L-Carnitin Hydrochlorid enthält.

2. Fruchtgummizusammensetzung nach Anspruch 1,
**dadurch gekennzeichnet, dass**
L-Carnitin und/oder L-Carnitin Salz und/oder L-Carnitin-Komplex und/oder L-Carnitin-Komplexsalz und/oder Acetyl-L-Carnitin-Salz mit einem Reinheitsgrad von mindestens 99 % und höchstens 1 % Restbestandteite vorliegt.

3. Fruchtgummizusammensetzungen nach einem der vorangegangenen Ansprüche,
**dadurch gekennzeichnet, dass**
das Süßungsmittel ausgewählt ist aus der Gruppe bestehend aus Glukosesirup, Zucker, insbesondere Saccharose, Fructose, Sorbit und Zuckeraustauschstoffen, insbesondere Isomalt oder eine Kombination derjenigen.

4. Fruchtgummizusammensetzungen nach einem der vorangegangenen Ansprüche,
**dadurch gekennzeichnet, dass**
das Gelier- und/oder Verdickungsmittel ausgewählt ist aus der Gruppe bestehend aus Gelatine und/oder Pektine und/oder Stärke und/oder modifizierte Stärke und/oder Agar Agar und/oder Gummi Arabicum oder Mischungen davon.

5. Fruchtgummizusammensetzungen nach einem der vorangegangenen Ansprüche,
**dadurch gekennzeichnet, dass**
das Säuerungsmittel Citronensäure und/oder Milchsäure und/oder Apfelsäure oder Mischungen davon ist.

6. Fruchtgummizusammensetzungen nach einem der vorangegangenen Ansprüche,
**dadurch gekennzeichnet, dass**
der Farbstoff mindestens ein färbendes Frucht- und Pflanzenextrakt und/oder mindestens einen künstlichen Farbstoff und/oder mindestens einen naturidentischen Farbstoff enthält.

7. Fruchtgummizusammensetzungen nach einem der vorangegangenen Ansprüche,
**dadurch gekennzeichnet, dass**
das Trenn- und Glänzmittel Bienenwachs und/oder Carnaubawachs sowie ein ölhaltiges Mittel und das Bezuckerungsmitkel Zucker mit gegebenenfalls Fruchtsäuren und/oder Calcilactol sind.

8. Fruchtgummizusammensetzungen nach einem der vorangegangenen Ansprüche,
**dadurch gekennzeichnet, dass**
mindestens einer der Zusammensetzungsstoffe aus kontrolliert biologischem Anbau gemäß EG-Verordnung stammt.

9. Verfahren zur Herstellung einer Fruchtgummizusammensetzung mit mindestens einem Süßungsmittel, mindestens einem Gelier- und/oder Verdickungsmittel, mindestens einem Säuerungsmittel, mindestens einem Farbstoff, mindestens einem Aromastoff und als Oberflächenbehandlungsmittel mindestens einem Trenn- und Glänzmittel oder Bezuckerungsmittel,
**dadurch gekennzeichnet, dass**
der Fruchtgummizusammensetzung L-Carnitin der Formel C₇H₁₅NO₃ in zumindest zeitweise vorliegender kristalliner Form in Konzentrationen über 0.1 % (Gew.) und/oder mindestens ein L-pharmakologisch akzeptables L-Camitin-Salz, bevorzugt aus einer Gruppe, die L-Carnitin-Tartrat der Formel C₁₈H₃₆N₂O₁₂, L-Carnitin-Mannesiumcitrat der Formel C₁₃H₂₁1MgNO₁₀ und L-Carnitin-Fumarat der Formel C₁₁H₁₉NO₇ umfasst und/oder mindestens eine L-Camitin-Salzmischung und/oder mindestens ein
L-Carnitin-Komplex und/oder mindestens ein L-Carnitin Komplexsalz und/oder ein pharmakologisch akzeptables Acetyl-L-Carnitin-Salz bevorzugt Acetyl-L-Carnitin-Hydrochlorid-zugesetzt wird.

10. Verfahren nach Anspruch 9,
**dadurch gekennzeichnet, dass**
das L-Carnitin und/oder L-Carnitin-Salz und/oder L-Carnitin-Komplex und/oder L-Carntin-Komplexsalz_und/oder Acetyl-L-Carnitin-Salz mit einem Reinheitsgrad von mindestens 99-% und höchstens 1-% Restbestandteile zugemischt werden.

11. Anwendung einer Fruchtgummizusammensetzung gemäß einem der Ansprüche 1-8 zur Herstellung von Nahrungsergänzungsmitteln.

## Claims

1. A fruit gum composition comprising at least one sweetener, at least one gelling agent and/or thickener, at least one souring agent, at least one colorant, at least one flavoring and at least one release and glazing agent or sugar-coating agent as a surface-treatment agent, **characterized in that** the fruit gum composition additionally comprises L-carnitine of the formula C₇H₁₅NO₃ in an at least temporarily existing crystalline form in concentrations above 0,1 % (Mass) and/or at least one pharmacologically acceptable L-carnitine salt, preferably from a group which comprises L-carnitinetartrate of the formula C₁₈H₃₆N₂O₁₂, L-carnitine-magnesiumcitrate of the formula C₁₃H₂₁MgNO₁₀ and L-carnitinefumarate of the formula C₁₁H₁₉NO₇ and/or at least one mixture of L-carnitine salts and/or at least one L-carnitine complex and/or at least one L-carnitine complex salt and/or a pharmacologically acceptable acetyl-L-carnitine salt, preferably acetyl-L-carnitinehydrochloride.

2. The fruit gum composition as claimed in claim 1,
**characterized in that**
L-carnitine and/or L-carnitine salt and/or L-carnitine complex and/or L-carnitine complex salt and/or acetyl-L-carnitinehydrochloride are present with a purity grade of at least 99 % and at most 1 % of residual components.

3. The fruit gum composition according to one of the preceding claims,
**characterized in that**
the sweetener is selected from the group consisting of glucose syrup, sugar, especially sucrose, fructose, sorbitol and sugar substitutes, especially isomalt or any combination thereof.

4. The fruit gum composition according to one of the preceding claims,
**characterized in that**
the gelling agent and/or thickener is selected from the group consisting of gelatin and/or pectine and/or starch and/or modified starch and/or agar agar and/or gum Arabic or any combination thereof.

5. The fruit gum composition according to one of the preceding claims,
**characterized in that**
the souring agent is citric acid and/or lactic acid and/or malic acid or any combination thereof.

6. The fruit gum composition according to one of the preceding claims,
**characterized in that**
the colorant comprises at least one coloring fruit or plant extract and/or at least one artificial colorant and/or at least one nature-identical colorant.

7. The fruit gum composition according to one of the preceding claims,
**characterized in that**
the release and glazing agent is beeswax and/or carnauba wax and an oil-containing agent and the sugar-coating agent is sugar with fruit acids and/or calcilactol if necessary.

8. The fruit gum composition according to one of the preceding claims,
**characterized in that**
at least one of the composition substances derives from controlled biological cultivation according to the Council Regulation (EC).

9. A method of providing a fruit gum composition containing at least one sweetener, at least one gelling agent and/or thickener, at least one souring agent, at least one colorant, at least one flavoring and at least one release and glazing agent or sugar-coating agent as a surface-treatment agent,
**characterized in that**
L-carnitine of the formula C₇H₁₅NO₃ in an at least temporarily existing crystalline form in concentrations above 0,1 % (Mass) and/or at least one pharmacologically acceptable L-carnitine salt, preferably of a group which comprises L-carnitinetartrate of the formula C₁₈H₃₈N₂O₁₂, L-carnitine-magnesiumcitrate of the formula C₁₃H₂₁MgNO₁₀ and L-carnitinefumarate of the formula C₁₁H₁₉NO₇ and/or at least one mixture of L-carnitine salts and/or at least one L-carnitine complex and/or at least one L-carnitine complex salt and/or a pharmacologically acceptable acetyl-L-carnitine salt, preferably acetyl-L-carnitinehydrochloride is added to the fruit gum composition.

10. The method as claimed in claim 9,
**characterized in that**
the L-carnitine and/or L-carnitine salt and/or L-carnitine complex and/or L-carnitine complex salt and/or acetyl-L-carnitine salt are added in a purity grade of at least 99 % and at most 1 % of the residual components.

11. Usage of the fruit gum composition according to one of the claims 1 - 8 for manufacture of dietary supplements.

## Revendications

1. Composition de gomme aux fruits, contenant au moins un édulcorant, au moins un gélifiant et/ou un épaississant, au moins un acidifiant, au moins un colorant, au moins un aromatisant et, comme agent de traitement de surface, au moins un agent séparateur et de glaçage ou un agent de dragéification,
**caractérisée en ce que** la composition de gomme aux fruits contient en outre de la L-carnitine de formule C₇H₁₅NO₃, se présentant au moins temporairement sous une forme cristalline, en concentrations supérieures à 0,1 % (en poids) et/ou au moins un sel de L-carnitine pharmacologiquement acceptable, de préférence provenant d'un groupe, qui comprend le tartrate de L-carnitine de formule C₁₈H₃₆N₂O₁₂, le citrate de magnésium de L-carnitine de formule C₁₃H₂₁MgNO₁₀ et le fumarate de L-carnitine de formule C₁₁H₁₉NO₇, et/ou au moins un mélange de sels de L-carnitine et/ou au moins un complexe de L-carnitine et/ou au moins un sel complexe de L-carnitine et/ou un sel de L-carnitine acétylée pharmacologiquement acceptable, de préférence le chlorhydrate de L-carnitine acétylée.

2. Composition de gomme aux fruits selon la revendication 1,
**caractérisée en ce que**
la L-carnitine et/ou un sel de L-carnitine et/ou un complexe de L-carnitine et/ou un sel complexe de L-carnitine et/ou un sel de L-carnitine acétylée est présent avec un degré de pureté d'au moins 99 % et avec, au maximum, 1 % de résidus.

3. Compositions de gomme aux fruits selon l'une quelconque des revendications précédentes,
**caractérisées en ce que**
l'édulcorant est choisi du groupe constitué du sirop de glucose, du sucre, en particulier du saccharose, du fructose, du sorbitol et de succédanés du sucre, en particulier de l'isomalt, ou d'une combinaison de ceux-ci.

4. Compositions de gomme aux fruits selon l'une quelconque des revendications précédentes,
**caractérisées en ce que**
le gélifiant et/ou l'épaississant est choisi dans le groupe constitué de la gélatine et/ou de la pectine et/ou de l'amidon et/ou de l'amidon modifié et/ou de l'agar-agar et/ou de la gomme arabique ou de mélanges de ceux-ci.

5. Compositions de gomme aux fruits selon l'une quelconque des revendications précédentes,
**caractérisées en ce que**
l'acidifiant est l'acide citrique et/ou l'acide lactique et/ou l'acide malique ou des mélanges de ceux-ci.

6. Compositions de gomme aux fruits selon l'une quelconque des revendications précédentes,
**caractérisées en ce que**
le colorant contient au moins un extrait de fruit et de plante colorant et/ou au moins un colorant artificiel et/ou au moins un colorant identique à un colorant naturel.

7. Compositions de gomme aux fruits selon l'une quelconque des revendications précédentes,
**caractérisées en ce que**
l'agent séparateur et/ou l'agent de glaçage est/sont de la cire d'abeille et/ou de la cire de carnauba, ainsi qu'un agent contenant une huile, tandis que l'agent de dragéification est le sucre avec éventuellement des acides de fruit et/ou le calcilactol.

8. Compositions de gomme aux fruits selon l'une quelconque des revendications précédentes,
**caractérisées en ce que**
au moins une des substances de la composition provient d'une culture biologique contrôlée selon un règlement de la CE.

9. Procédé pour la fabrication d'une composition de gomme aux fruits avec au moins un édulcorant, au moins un gélifiant et/ou un épaississant, au moins un acidifiant, au moins un colorant, au moins un aromatisant et, comme agent de traitement de surface, au moins un agent séparateur et de glaçage ou un agent de dragéification,
**caractérisé en ce que**
l'on ajoute à la composition de gomme aux fruits de la L-carnitine de formule C₇H₁₅NO₃, existant au moins temporairement sous une forme cristalline, en concentrations supérieures à 0,1 % (en poids) et/ou au moins un sel de L-carnitine pharmacologiquement acceptable, de préférence provenant d'un groupe, qui comprend le tartrate de L-carnitine de formule C₁₈H₃₆N₂O₁₂, le citrate de magnésium de L-carnitine de formule C₁₃H₂₁MgNO₁₀ et le fumarate de L-carnitine de formule C₁₁H₁₉NO₇, et/ou au moins un mélange de sels de L-carnitine et/ou au moins un complexe de L-carnitine et/ou au moins un sel complexe de L-carnitine et/ou un sel de L-carnitine acétylée pharmacologiquement acceptable, de préférence le chlorhydrate de L-carnitine acétylée.

10. Procédé selon la revendication 9,
**caractérisé en ce que**
l'on complète le mélange avec la L-carnitine et/ou un sel de L-carnitine et/ou un complexe de L-carnitine et/ou un sel complexe de L-carnitine et/ou un sel de L-carnitine acétylée, avec un degré de pureté d'au moins 99 % et avec, au maximum, 1 % de résidus.

11. Utilisation d'une composition de gomme aux fruits selon l'une quelconque des revendications 1 à 8 pour la fabrication de compléments alimentaires.
